# EUROPÄISCHE PATENTSCHRIFT

(11) **EP 0 284 734 B1**
(45) Veröffentlichungstag und Bekanntmachung des Hinweises auf die Patenterteilung: **19.05.1993**
(21) Anmeldenummer: 88101648.9
(22) Anmeldetag: 04.02.1988
(51) Int. Cl.: H04Q 1/453, H04Q 1/46

(54) **Schaltungsanordnung zum Erkennen von Doppelton-Mehrfrequenzsignalen in Fernsprechanlagen**
Circuit for the recognition of dual tone multifrequency signals in telephone exchanges
Circuit pour la reconnaissance de signaux multifréquences à deux tonalités dans des centraux téléphoniques

(30) Priorität: 31.03.1987 DE 3710695
(43) Veröffentlichungstag der Anmeldung: 05.10.1988
(73) Patentinhaber: SIEMENS AKTIENGESELLSCHAFT, 80333 München (DE)
(72) Erfinder: Hubert, Christian, Dipl.-Ing., D-4790 Paderborn (DE); Janssen, Rainer, Dr., D-4790 Paderborn (DE)

(56) Entgegenhaltungen:
- GB-A- 2 113 880
- PATENT ABSTRACTS OF JAPAN, Band 2, Nr. 29 , 23. Februar 1978, Seite 12257 E 77; & JP-A-52 152 104
- ELECTRICAL COMMUNICATION, Band 54, Nr. 4, 1979, Seiten 319-325; G. THYSSENS et al.: "Digital multifrequency recievers and senders"

## Beschreibung

Die Erfindung betrifft eine Schaltungsanordnung zum Erkennen von Doppelton-Mehrfrequenzsignalen zweier Frequenzbereiche in Fernsprechanlagen mit begrenzter Übertragungsbandbreite, mit einer der Zahl möglicher Einzeltöne entsprechenden Zahl paralleler Bandpaßfilter, deren Ausgangssignale des oberen und des unteren Frequenzbereichs summiert und einzeln gewichtet werden, wonach die gewichteten Ausgangssignale jeweils mit der Ausgangssignalsumme ihres Frequenzbereichs verglichen werden, um das Auftreten eines gültigen Einzeltons am gemeinsamen Eingang der Bandpaßfilter zu signalisieren.

Eine Schaltungsanordnung dieser Art ist durch die Zeitschrift "Electronic Design News" vom 21. März 1985, Seiten 205 bis 220, bekannt und dort in Fig. 7 auf Seite 216 dargestellt. Zusätzlich zu den für die möglichen Einzeltöne vorgesehenen Bandpaßfiltern enthält sie dieselbe Anzahl an weiteren Bandpaßfiltern, die jeweils auf die erste Harmonische der Mittenfrequenz eines Bandpaßfilters für einen jeweiligen Einzelton abgestimmt sind. Diese zusätzlichen Bandpaßfilter dienen in Verbindung mit einer für sie zusätzlich vorgesehenen Auswerteschaltung dazu, die Sprachsicherheit beim Erkennen von Doppelton-Mehrfrequenzsignalen zu erhöhen. Wenn ein Einzelton zusammen mit seiner ersten Harmonischen erkannt wird, so ist mit erhöhter Sicherheit davon auszugehen, daß dieser Einzelton ungültig ist, d.h. auf die Übertragung von Sprachfrequenzen zurückzuführen ist, denn die Doppelton-Mehrfrequenzsignale werden in Form möglichst reiner Sinustöne übertragen, so daß sie oberwellenarm sind.

Die vorbekannte Schaltungsanordnung benötigt also zum Erkennen von Doppelton-Mehrfrequenzsignalen eine gegenüber der Zahl möglicher Einzeltöne verdoppelte Zahl von Bandpaßfiltern sowie den doppelten Aufwand an Auswerteschaltungen. Wird sie in digitaler Technik realisiert, so ist eine Abtastfrequenz für den Betrieb erforderlich, die mindestens den vierfachen Wert der höchsten Einzeltonfrequenz oder mindestens den doppelten Wert der höchsten vorkommenden harmonischen Frequenz hat. Dies erfordert sehr kurze Rechenzeiten bei der Signalauswertung wodurch wiederum die Zahl möglicher Übertragungskanäle, die ein Rechner auswerten kann, begrenzt wird.

Es ist Aufgabe der Erfindung, eine Schaltungsanordnung zum Erkennen von Doppelton-Mehrfrequenzsignalen anzugeben, die ohne Anwendung des Prinzips der Obertonauswertung mindestens dieselbe Sprachsicherheit wie die vorbekannte Schaltungsanordnung erreicht.

Diese Aufgabe wird für eine Schaltungsanordnung eingangs genannter Art erfindungsgemäß dadurch gelöst, daß der Summierung jeweils ein weiterer Summand zugeführt wird, der das Ergebnis einer Summierung der Ausgangssignale von mindestens zwei weiteren Bandpaßfiltern ist, deren Mittenfrequenzen außerhalb der beiden Frequenzbereiche liegen.

Die Erfindung beruht auf der Erkenntnis, daß Sprachsignale, deren Frequenzen innerhalb der für die Mehrfrequenzsignale vorgesehenen Frequenzbereiche liegen, stets auch Frequenzen enthalten, die außerhalb dieser Frequenzbereiche liegen. Wenn nun z.B. nur zwei weitere Bandpaßfilter vorgesehen sind, deren Mittenfrequenzen außerhalb der beiden Frequenzbereiche liegen, so werden sie durch solche weiteren Frequenzen der Sprachsignale beaufschlagt. Wenn die Ausgangssignale der beiden weiteren Bandpaßfilter dann summiert werden und das Ergebnis dieser Summierung als zusätzlicher Summand der Summierung der Ausgangssignale der die Einzeltöne empfangenden Bandpaßfilter zugeführt wird, so ist es möglich, den zur Signalauswertung durchgeführten Vergleich durch die entsprechend beeinflußte Vergleichsgröße so zu steuern, daß empfangene Einzeltöne bei gleichzeitigem Auftreten von Sprachfrequenzen nicht als gültige Mehrfrequenzsignale ausgewertet werden. Es wird auf diese Weise eine hohe Sprachsicherheit mit dem zusätzlichen Aufwand von mindestens zwei weiteren Bandpaßfiltern sowie der zugehörigen Summierschaltungen erreicht. Wird eine solchermaßen arbeitende Schaltungsanordnung in digitaler Technik realisiert, so muß die Abtastfrequenz für ihren Betrieb lediglich mindestens den doppelten Wert der höchsten Einzeltonfrequenz haben. Dadurch steht dann eine gegenüber dem vorbekannten Verfahren doppelt lange Auswertezeit zwischen den einzelnen Abtastvorgängen zur Verfügung.

Die Mittenfrequenzen der weiteren Bandpaßfilter liegen zweckmäßig etwa in der Mitte der Frequenzbereiche, die sich innerhalb der Übertragungsbandbreite außerhalb der Frequenzbereiche für die Einzeltöne ergeben. Dies ist sinnvoll, weil dann der größtmögliche Abstand zum jeweiligen Frequenzbereich gegeben und das Auftreten von Sprachfrequenzen eindeutig feststellbar ist.

Eine besonders vorteilhafte Weiterbildung der Erfindung zeichnet sich dadurch aus, daß eine Summierung der Ausgangssignale von drei weiteren Bandpaßfiltern, deren Mittenfrequenzen unter, zwischen und über den beiden Frequenzbereichen liegen, für jeden der beiden Frequenzbereiche erfolgt, wobei das Ausgangssignal des Bandpaßfilters mit der niedrigsten bzw. höchsten Mittenfrequenz für den unteren bzw. oberen Frequenzbereich eine Phasenverschiebung von 180° erfährt.

Durch diese Weiterbildung wird erreicht, daß für jeden der beiden Frequenzbereiche ein Summand erzeugt wird, dessen frequenzabhängige Größe der Signalauswertung des Frequenzbereichs, für den er verwendet wird, optimal angepaßt werden kann.

Wenn die Ausgangssignale der weiteren Bandpaßfilter vor ihrer Summierung gewichtet werden, so ist dadurch eine Anpassung eines jeden einzelnen Ausgangssignals dieser Bandpaßfilter und damit eine Anpassung der Summiercharakteristik dieser Ausgangssignale an die Eigenschaften der Sprachübertragung möglich.

Ein Ausführungsbeispiel der Erfindung wird im folgenden an Hand der Figuren näher erläutert. Es zeigen:
- Fig. 1: eine schematische Blockdarstellung einer Schaltungsanordnung nach der Erfindung, bei der drei weitere Bandpaßfilter und zwei Summierungskanäle vorgesehen sind,
- Fig. 2: den Frequenzgang der mit der Schaltungsanordnung nach Fig. 1 erzeugten beiden Summanden für den unteren und den oberen Frequenzbereich und
- Fig. 3 und 4: den Frequenzgang der Dämpfung der Schaltungsanordnung nach Fig. 1 im Falle des Empfangs eines Doppelton-Mehrfrequenzsignals mit zwei vorbestimmten Frequenzen.

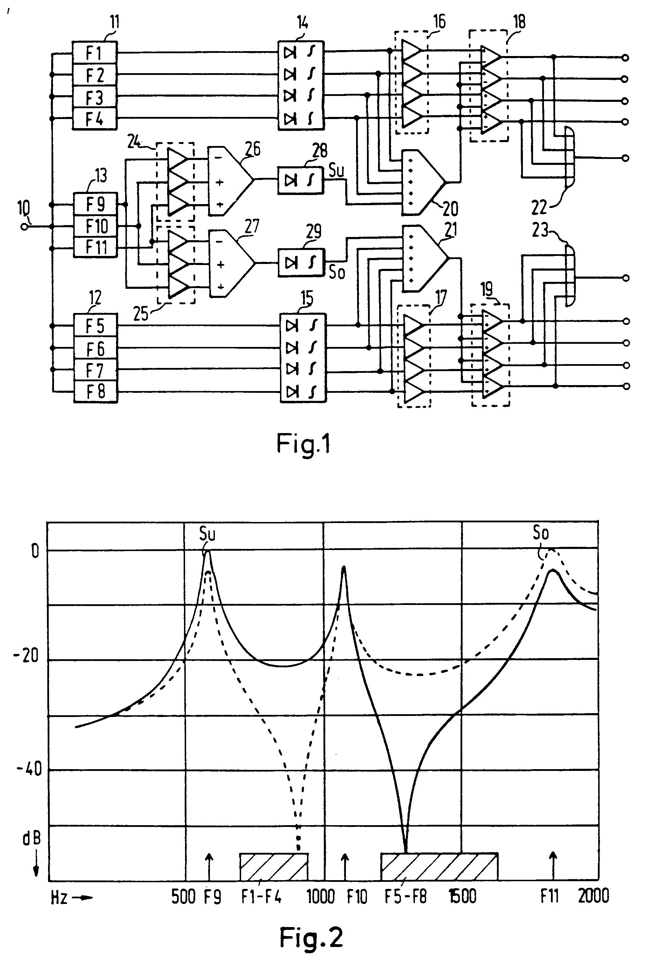

In Fig. 1 ist eine Empfangsschaltung für Doppelton-Mehrfrequenzsignale dargestellt, die an einem Signaleingang 10 mit ingesamt elf Bandpaßfiltern verbunden ist, die Gruppen 11, 12 und 13 bilden. Die Bandpaßfiltergruppe 11 hat die Mittenfrequenzen F1 bis F4, die Bandpaßfiltergruppe 12 hat Mittenfrequenzen F5 bis F8,und die Bandpaßfiltergruppe 13 hat Mittenfrequenzen F9 bis F11. Die beiden Bandpaßfiltergruppen 11 und 12 sind auf die Mehrfrequenzsignale abgestimmt und können somit Doppeltöne in den beiden Frequenzbereichen F1 bis F4 und F5 bis F8 empfangen. Die Frequenzwerte F1 bis F4 und F5 bis F8 können z.B. nach CCITT-Norm bemessen sein und liegen dann in zwei Frequenzbereichen, wobei der Frequenzbereich F1 bis F4 der untere und der Frequenzbereich F5 bis F8 der obere Frequenzbereich ist.

Die Mittenfrequenzen der Bandpaßfiltergruppe 13 sind so bemessen, daß sie etwa in der Mitte der Frequenzbereiche liegen, die sich außerhalb der Frequenzbereiche F1 bis F4 und F5 bis F8 innerhalb der Übertragungsbandbreite ergeben. Die Übertragungsbandbreite kann dabei mit Einbeziehung des Signalisierungstonbereichs oder ohne diesen Bereich betrachtet werden.

Die Ausgangssignale der Bandpaßfiltergruppe 11 werden einer Gleichrichtungs- und Effektivwertbildungsschaltung 14 zugeführt. Eine entsprechende Schaltung 15 ist für die Ausgangssignale der Bandpaßfiltergruppe 12 vorgesehen. Die Effektivwerte der Ausgangssignale beider Bandpaßfiltergruppen 11 und 12 werden dann in jedem Frequenzbereich einer Gewichtungsschaltung 16 bzw. 17 zugeführt, deren Ausgangssignale den nicht invertierenden Eingängen einer Vergleichergruppe 18 bzw. 19 zugeführt werden. Die invertierenden Eingänge der jeweiligen Vergleichergruppe 18 bzw. 19 erhalten gemeinsam das Ausgangssignal eines Summierers 20 bzw. 21, der die Effektivwerte der Ausgangssignale der jeweiligen Bandpaßfiltergruppe 11 und 12 sowie ein Signal Su bzw. So summiert, welches in noch zu beschreibender Weise erzeugt wird.

Die Ausgangssignale der Vergleichergruppen 18 und 19 bilden die Ausgangssignale der Empfangsschaltung und werden einer weiteren, in Fig. 1 nicht dargestellten Signalauswertung zugeführt. Außerdem werden sie jeweils einer ODER-Verknüpfung 22 bzw. 23 zugeführt, deren Ausgangssignal das Auftreten eines gültigen Einzeltons im jeweiligen Frequenzbereich signalisiert und gleichfalls einer weiteren Auswertung zugeführt werden kann.

Die vorstehend beschriebene Arbeitsweise der in Fig. 1 gezeigten Schaltungsanordnung für den oberen und den unteren Frequenzbereich ist an sich bekannt, wenn von der Zuführung des weiteren Summanden Su und So zu den Summierschaltungen 20 und 21 abgesehen wird. Das Zusammenwirken der jeweiligen Gewichtungsschaltung 16 bzw. 17 mit der jeweiligen Vergleichergruppe 18 bzw. 19 führt zu einer Auswertemöglichkeit für einen jeden Einzelton innerhalb eines sehr schmalen Frequenzbereichs, ohne daß Bandpaßfilter mit sehr steilen Flanken ihrer Durchlaßcharakteristik für die beiden Bandpaßfiltergruppen 11 und 12 erforderlich sind.

Die beiden zusätzlichen Summanden Su und So werden aus den Ausgangssignalen der Bandpaßfiltergruppe 13 erzeugt, indem diese in zwei Summierungskanälen summiert und einer Effektivwertbildung unterzogen werden. In jedem Summierungskanal werden die drei Ausgangssignale jeweils über eine Gewichtungsschaltung 24 bzw. 25 geführt, in der sie einzeln einem vorgegebenen Verlauf des Frequenzganges der Gesamtschaltung angepaßt werden können. Danach werden sie kanalweise in einer Summierschaltung 26 bzw. 27 summiert. Die jeweilige Ausgangssignalsumme wird über eine Gleichrichtungs- und Effektivwertschaltung 28 bzw. 29 als Summand Su bzw. So der jeweiligen Summierschaltung 20 bzw. 21 zugeführt.

Die Summierung der drei Ausgangssignale der Bandpaßfiltergruppe 13 erfolgt derart, daß das Ausgangssignal mit der unteren Frequenz F9 im Summierer 26 mit negativem Vorzeichen summiert wird und daß das Ausgangssignal mit der Frequenz F11 im Summierer 27 mit negativem Vorzeichen summiert wird. Dadurch wird für diese beiden Ausgangssignale beim jeweiligen Summiervorgang eine Phasenverschiebung von 180° erreicht, die auch dadurch erzielt werden könnte, daß eine entsprechende Invertierung in der jeweiligen Gewichtungsschaltung 24 bzw. 25 erfolgt.

In Fig. 2 ist der Frequenzgang der beiden Summanden Su und So durchgezogen bzw. gestrichelt dargestellt. Die dargestellten Frequenzgänge ergeben sich nicht nur aus der Addition von Beträgen der zugeführten Signale sondern auch durch den Einfluß der durch die Filter F9 bis F11 eingeführten Phasenverschiebungen. Es sind die Mittenfrequenzen F9, F10 und F11 der Bandpaßfiltergruppe 13 (Fig. 1) jeweils durch einen Pfeil angedeutet. Diese Frequenzen sind in beschriebener Weise so gelegt, daß sie außerhalb der beiden Frequenzbereiche für die Doppelton-Mehrfrequenzsignale liegen. Es ist zu erkennen, daß jeweils bei einer der drei Frequenzen F9, F10 und F11 ein Maximum des Summanden Su bzw. So auftritt, wobei beide Summanden ein gemeinsames Maximum bei der Frequenz F10 haben. Der Frequenzgang zeigt deutlich, daß der Summand Su im Bereich der Frequenzen F1 bis F4, der als unterer Frequenzbereich in Fig. 2 schraffiert angedeutet ist, eine besonders geringe Dämpfung erfährt und daß derselbe Effekt für den Summanden So im oberen Frequenzbereich F5 bis F8 vorliegt, der gleichfalls schraffiert angedeutet ist. Der Summand Su erfährt im oberen Frequenzbereich F5 bis F8 eine hohe Dämpfung. Ebenso erfährt der Summand So im unteren Frequenzbereich F1 bis F4 eine hohe Dämpfung. Dies ist sinnvoll, weil die Summanden Su und So in den Summiervorgang, der mit den Summierschaltungen 20 und 21 (Fig. 1) durchgeführt wird, eine Sprachbewertung einführen. Diese Sprachbewertung wird für die beiden Frequenzbereiche F1 bis F4 und F5 bis F8 getrennt durchgeführt, denn der jeweilige Summand Su bzw. So soll aus dem Frequenzbereich, für den er nicht zur Sprachbewertung dient, möglichst wenig Anteile enthalten.

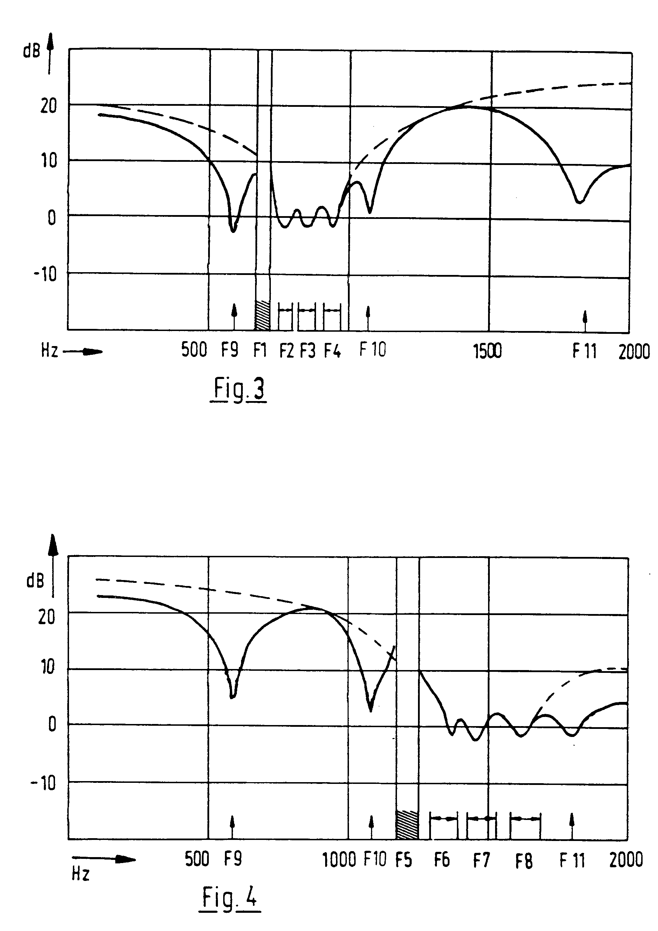

In Fig. 3 und 4 ist der Frequenzgang der Dämpfung der Schaltungsanordnung nach Fig. 1 im Falle des Empfangs eines Doppelton-Mehrfrequenzsignals mit den Frequenzen F1 und F5 dargestellt. Fig. 3 zeigt den Frequenzgang für den unteren Frequenzbereich F1 bis F4, Fig. 4 zeigt den Frequenzgang für den oberen Frequenzbereich F5 bis F8. Dabei ist jeweils gestrichelt der Frequenzgang dargestellt, der sich ohne die erfindungsgemäß vorgesehene Sprachbewertung ergeben würde. Es ist dadurch unmittelbar der mit der Erfindung erzielbare Effekt zu erkennen. Der jeweils durchgezogen dargestellte Frequenzgang ist das Ergebnis des Summiervorganges, der mit den Summierschaltungen 20 und 21 (Fig. 1) durchgeführt wird. In Fig. 3 und 4 sind in Übereinstimmung mit Fig. 2 die Mittenfrequenzen F9, F10 und F11 der zusätzlichen Bandpaßfiltergruppe 13 (Fig. 1) eingetragen, und es ist zu erkennen, daß der Frequenzgang der Dämpfung, der durch den zusätzlichen Summanden Su bzw. So erreicht wird, auch im Bereich der Mittenfrequenzen F9, F10 und F11 ein Minimum hat. Dies zeigt, daß die drei Mittenfrequenzen F9, F10 und F11 besonders stark bewertet werden, wenn eine von ihnen gemeinsam mit einem Doppelton-Mehrfrequenzsignal auftritt. Durch diese starke Bewertung eines Sprachfrequenzsignals wird die Summierung in der jeweiligen Summierschaltung 20, 21 (Fig. 1) so beeinflußt, daß die jeweilige Vergleichergruppe 18 bzw. 19 ihre Entscheidungsschwelle, ob der gleichzeitig empfangene Einzelton des Doppelton-Mehrfrequenzsignals ein gültiger Einzelton ist oder nicht, so verändert, daß dieser Einzelton als ungültig bewertet wird.

In Fig. 3 und 4 ist für die Frequenzen F1 und F5 jeweils ein Bereich begrenzter Bandbreite dargestellt, in dem der Verlauf der Dämpfungskurve unterbrochen ist. Es handelt sich dabei um das jeweilige Frequenzband, in dem Einzeltöne mit der Frequenz F1 bzw. F5 unter Berücksichtigung vorgegebener Toleranzen liegen dürfen. Wenn abweichend von dem in Fig. 3 und 4 gezeigten Beispiel ein Doppelton-Mehrfrequenzsignal mit anderen Einzeltönen empfangen wird, so ist im Bereich F1 bzw. F5 ein Dämpfungsverlauf mit einem Minimum ähnlich wie bei den in Fig. 3 und 4 für die übrigen Frequenzen des oberen und unteren Frequenzbereichs dargestellten Abschnitten gegeben.

Die bereits beschriebenen Gewichtungsschaltungen 24 und 25 (Fig. 1) ermöglichen eine Veränderung der für die Frequenzen F9, F10 und F11 in den Dämpfungsverlauf nach Fig. 3 und 4 eingeführten Minima. Es ist damit möglich, das Gesamtverhalten der in Fig. 1 gezeigten Schaltungsanordnung an die Charakteristik der menschlichen Sprache bzw. an die Eigenschaften des jeweils verwendeten Übertragungskanals optimal anzupassen. Außerdem ist es dadurch möglich, das Kriterium der mit der Schaltungsanordnung nach Fig. 1 getroffenen Entscheidung, ob störende Sprachsignale als solche erkannt werden sollen oder nicht, auf vorgegebene Schwellen zu legen. Damit kann sehr einfach die Entscheidungsschwelle in einen Bereich gelegt werden, in dem Sprachsignale, die auf Nebensprechen zurückzuführen sind, noch als zulässig bewertet werden, während Sprachsignale, deren Amplituden in der Größenordnung der vorgegebenen Amplituden von Doppelton-Mehrfrequenzsignalen liegt, als unzulässig bewertet werden.

## Patentansprüche

1. Schaltungsanordnung zum Erkennen von Doppelton-Mehrfrequenzsignalen zweier Frequenzbereiche (F1 bis F4, F5 bis F8) in Fernsprechanlagen mit begrenzter Übertragungsbandbreite, mit einer der Zahl möglicher Einzeltöne entsprechenden Zahl paralleler Bandpaßfilter (11,12), deren Ausgangssignale des oberen und des unteren Frequenzbereichs summiert und einzeln gewichtet werden, wonach die gewichteten Ausgangssignale jeweils mit der Ausgangssignalsumme ihres Frequenzbereichs verglichen werden, um das Auftreten eines gültigen Einzeltons am gemeinsamen Eingang der Bandpaßfilter zu signalisieren, dadurch **gekennzeichnet,** daß, mindestens zwei weitere Bandpaßfilter (13) vorgesehen sind, deren Mittenfrequenzen (F9 bis F11) außerhalb der beiden Frequenzbereiche (F1 bis F4, F5 bis F8) liegen, derart, daß der Summierung jeweils ein weiterer Summand (Su, So) zugeführt wird, der das Ergebnis einer Summierung der Ausgangssignale der weiteren Bandpaßfilter (13) ist.

2. Schaltungsanordnung nach Anspruch 1, dadurch **gekennzeichnet,** daß eine der Mittenfrequenzen (F9 bis F11) etwa in der Mitte zwischen der Frequenz (F4) des obersten Einzeltons im unteren Frequenzbereich (F1 bis F4) und der Frequenz (F5) des untersten Einzeltons im oberen Frequenzbereich (F5 bis F8) liegt.

3. Schaltungsanordnung nach Anspruch 2, dadurch **gekennzeichnet,** daß eine weitere Mittenfrequenz etwa in der Mitte zwischen der Frequenz (F8) des obersten Einzeltons des oberen Frequenzbereichs (F5 bis F8) und der Obergrenze der Übertragungsbandbreite liegt.

4. Schaltungsanordnung nach Anspruch 2 oder 3, dadurch **gekennzeichnet,** daß eine weitere Mittenfrequenz (F9) etwa in der Mitte zwischen der Frequenz (F1) des untersten Einzeltons des unteren Frequenzbereichs (F1 bis F4) und einer Frequenz liegt, die durch die Untergrenze der Übertragungsbandbreite oder durch die Obergrenze des Signalisierungstonbereichs gegeben ist.

5. Schaltungsanordnung nach einem der Ansprüche 1 bis 4, dadurch **gekennzeichnet,** daß eine Summierung der Ausgangssignale von drei weiteren Bandpaßfiltern (13), deren Mittenfrequenzen (F9 bis F11) unter, zwischen und über den beiden Frequenzbereichen (F1 bis F4, F5 bis F8) liegen, für jeden der beiden Frequenzbereiche (F1 bis F4, F5 bis F8) erfolgt, wobei das Ausgangssignal des Bandpaßfilters mit der niedrigsten bzw. höchsten Mittenfrequenz (F9 bzw. F11) für den unteren bzw. oberen Frequenzbereich (F1 bis F4 bzw. F5 bis F8) eine Phasenverschiebung von 180° erfährt.

6. Schaltungsanordnung nach einem der Ansprüche 1 bis 5, dadurch **gekennzeichnet,** daß die Ausgangssignale der weiteren Bandpaßfilter (13) vor ihrer Summierung (in 24, 25) gewichtet werden.

## Claims

1. Circuit arrangement for the recognition of dual tone multifrequency signals of two frequency ranges (F1 to F4, F5 to F8) in telephone equipments with limited transmission bandwidth, having a number of parallel bandpass filters (11, 12) corresponding to the number of possible single tones whose output signals of the upper and of the lower frequency range are summed and weighted individually, whereupon the weighted output signals are compared with the output signal sum of their frequency range in each case in order to signal the occurrence of a valid single tone at the common input of the bandpass filter, characterised in that at least two further bandpass filters (13) are provided, the centre frequencies (F9 to F11) of which lie outside the two frequency ranges (F1 to F4, F5 to F8), in such a way that a further summand (Su, So) which is the result of an addition of the output signals of the further bandpass filters (13) is supplied to the addition.

2. Circuit arrangement according to Claim 1, characterised in that one of the centre frequencies (F9 to F11) lies approximately in the middle between the frequency (F4) of the highest single tone in the lower frequency range (F1 to F4) and the frequency (F5) of the lowest single tone in the upper frequency range (F5 to F8).

3. Circuit arrangement according to Claim 2, characterised in that a further centre frequency lies approximately in the middle between the frequency (F8) of the highest single tone of the upper frequency range (F5 to F8) and the upper limit of the transmission bandwidth.

4. Circuit arrangement according to Claim 2 or 3, characterised in that a further centre frequency (F9) lies approximately in the middle between the frequency (F1) of the lowest single tone of the lower frequency range (F1 to F4) and a frequency determined by the lower limit of the transmission bandwidth or by the upper limit of the signalling tone range.

5. Circuit arrangement according to one of Claims 1 to 4, characterised in that the output signals of three further bandpass filters (13), the centre frequencies (F9 to F11) of which lie below, between and above the two frequency ranges (F1 to F4, F5 to F8), are added for each of the two frequency ranges (F1 to F4, F5 to F8), the output signal of the bandpass filter with the lowest and highest centre frequency respectively (F9 and F11 respectively) for the lower and upper frequency range respectively (F1 to F4 and F5 to F8 respectively) experiencing a phase shift of 180°.

6. Circuit arrangement according to one of Claims 1 to 5, characterised in that the output signals of the further bandpass filters (13) are weighted before they are added (in 24, 25).

## Revendications

1. Montage pour la reconnaissance de signaux multifréquences à deux tonalités (F1 à F4, F5 à F6) dans des installations téléphoniques de deux gammes de fréquences dans des installations téléphoniques à bande passante limitée, comportant un nombre de filtres passe-bande parallèles (11,12) qui correspond au nombre de tonalités possibles et dont les signaux de sortie des gammes de fréquences supérieure et inférieure sont sommés et pondérés individuellement, après quoi les signaux de sortie pondérés sont respectivement comparés avec la somme des signaux de sortie de leur gamme de fréquences pour signaler l'apparition d'une tonalité isolée valable à l'entrée commune des filtres passe-bande, caractérisé en ce qu'au moins deux filtres passe-bande supplémentaires (13) sont prévus, dont les fréquences centrales (F9, F11) sont situées en-dehors des deux gammes de fréquences (F1 à F4, F5 à F8), la réalisation étant telle, qu'à la sommation, on ajoute respectivement un terme de somme supplémentaire (Su, So) qui est le résultat d'une sommation des signaux de sortie desdits filtres passe-bande supplémentaires (13).

2. Montage selon la revendication 1, caractérisé en ce que l'une des fréquences centrales (F9 à F11) est située sensiblement au milieu, entre la fréquence (F4) de la tonalité individuelle la plus haute dans la gamme des fréquences inférieure (F1 à F4) et la fréquence (F5) de la tonalité individuelle la plus basse dans la gammes des fréquences supérieure (F5 à F8).

3. Montage selon la revendication 2, caractérisé en ce qu'une seconde fréquence centrale est située environ au milieu, entre la fréquence (F8) de la tonalité individuelle la plus haute de la gamme des fréquences supérieure (F5 et F8) et la limite supérieure de la bande passante de transmission.

4. Montage selon les revendications 2 ou 3, caractérisé en ce qu'une fréquence centrale (F9) supplémentaire est située environ au milieu, entre la fréquence (F1) de la tonalité individuelle la plus basse de la gamme des fréquences inférieure (F1 à F4) et une fréquence qui est donnée par la limite inférieure de la bande passante de transmission ou par la limite supérieure de la zone de signalisation de tonalité.

5. Montage selon l'une des revendications 1 à 4, caractérisé en ce que l'on procède à une sommation des signaux de sortie de trois autres filtres passe-bande (13), dont les fréquences centrales (F9 à F11) sont situées au-dessous, entre et au-dessus des deux gammes de fréquences (F1 à F4, F5 à F6), pour chacune des deux gammes de fréquences (F1 à F4, F5 à F8), le signal de sortie du filtre passe-bande, à fréquence centrale la plus basse ou la plus élevée (F9 ou F11) pour la gamme des fréquences (F1 à F4 ou F5 à F6) la plus basse ou la plus haute, subissant un décalage de phase de 180°.

6. Montage selon l'une des revendications 1 à 5, caractérisé en ce que les signaux de sortie desdits autres filtres passe-bande (13) seront pondérés avant leur sommation (dans 24, 25).
